# EUROPÄISCHE PATENTANMELDUNG

(11) **EP 2 990 687 A1**
(43) Veröffentlichungstag der Anmeldung: **02.03.2016**
(21) Anmeldenummer: 14183016.6
(22) Anmeldetag: 01.09.2014
(51) Int. Cl.: F16H 3/083, F16H 55/17

(54) **Schaltzahnrad für hohe Getriebespreizung**

(71) Anmelder: HILTI Aktiengesellschaft, 9494 Schaan (LI)
(72) Erfinder: Erhardt, Jochen, 86836 Klosterlechfeld (DE); Reichenberger, Thomas, 86929 Untermühlhausen (DE)
(74) Vertreter: Hilti Aktiengesellschaft Corporate Intellectual Property

(57) **Zusammenfassung**

Zahnrad für ein Getriebe, insbesondere ein Ziehkeilgetriebe. Das Zahnrad enthält ein erstes Ringelement und ein zweites Ringelement, wobei das erste Ringelement eine Mitnahmekontur zur Aufnahme eines Schaftstifts des Getriebes aufweist und das zweite Ringelement an einer Außenfläche eine Verzahnung aufweist.

## Beschreibung

Die vorliegende Erfindung bezieht sich auf ein Zahnrad für ein Getriebe, insbesondere ein Ziehkeilgetriebe.

Bei einem Ziehkeilgetriebe wird, ähnlich jedes anderen Getriebes, eine Drehzahl bzw. ein Drehmoment von einer ersten Welle (Antriebswelle) auf eine zweite Welle (Abtriebswelle) übertragen. Hierzu befindet sich auf der ersten Welle sowie auf der zweiten Welle eine Vielzahl unterschiedlich großer Zahnräder, d.h. Zahnräder mit unterschiedlich großen Aussendurchmessern. Die beiden Wellen sind in dem Getriebe so zueinander angeordnet, dass die einzelnen Zahnräder der Antriebswelle in die Zahnräder der Abtriebswelle greifen. Die einzelnen Zahnräder der beiden Wellen stehen dabei in unterschiedlichen Größenverhältnissen zueinander in Eingriff. Je nach Konstellation der unterschiedlich großen Zahnräder der Antriebswelle und der Abtriebswelle zueinander sind verschiedene Übersetzungsverhältnisse der beiden Wellen in dem Getriebe möglich.

Auf der Abtriebswelle sind dazu die einzelnen Zahnräder bewegbar, d.h. relativ zu der Abtriebswelle drehbar, positioniert. Mit anderen Worten: es besteht kein Kraftschluss zwischen der Abtriebswelle und den dazugehörigen Zahnrädern. Die Abtriebswelle kann somit relativ zu den Zahnrädern gedreht werden.

Im Gegensatz dazu sind die Zahnräder der Antriebswelle fest (d.h. kraftschlüssig) mit der Antriebswelle verbunden.

Die Abtriebswelle ist als Hohlwelle ausgebildet, in der sich ein Ziehkeil (auch Schaltstift genannt) befindet. Der Ziehkeil kann mit Hilfe einer Schaltstange in axialer Richtung innerhalb der als Hohlwelle ausgestaltenden Abtriebswelle verschoben werden.

Die einzelnen Zahnräder der Abtriebswelle weisen an der Innenseite eine Mitnahmekontur in Form von gegenüberliegenden Nuten auf. In diese Nuten kann der Ziehkeil eingefügt werden, wodurch sich eine form- bzw. kraftschlüssige Verbindung zwischen Abtriebswelle und dem jeweiligen Zahnrad ergibt. Aufgrund dieser form- bzw. kraftschlüssige Verbindung zwischen Abtriebswelle und dem jeweiligen Zahnrad der Abtriebswelle kann die Drehzahl bzw. das Drehmoment der Antriebswelle über die entsprechenden Zahnräder der beiden Wellen auf die Abtriebswelle übertragen werden.

Für eine optimale Nutzung bzw. Verwendung eines Ziehkeilgetriebes ist eine möglichst große Getriebespreizung von hoher Bedeutung. Die Getriebespreizung bezeichnet dabei das Größenverhältnis zwischen dem größten Zahnrad (größter Außendurchmesser des Zahnrads) zu dem kleinsten Zahnrad (kleinster Außendurchmesser des Zahnrads). Aufgrund des oftmals begrenzten Bauraums im Inneren des Getriebegehäuses kann jedoch das größte Zahnrad keinen unbegrenzt großen Außendurchmesser annehmen. Der Außendurchmesser des kleinsten Zahnrads kann wiederum aufgrund des notwendigen Mindestdurchmessers der Abtriebswelle nicht unterhalb eines Minimalwerts fallen. Dieser Minimalwert ist dabei häufig durch bestimmte Festigkeitswerte und Robustheitsvoraussetzungen an dieses kleine Zahnrad beeinflusst, da auch das kleinste Zahnrad im Getriebe relativ hohe Drehzahlen sowie ein relativ hohes Drehmoment aushalten und übertragen muss. Mit anderen Worten: der Außendurchmesser des kleinsten Zahnrads ist stets beachtlich größer als der Außendurchmesser der Abtriebswelle.

Aufgabe der vorliegenden Erfindung ist es daher ein Zahnrad für ein Getriebe, insbesondere ein Ziehkeilgetriebe, zur Verfügung zu stellen, mit dem eine möglichst große Getriebespreizung erreicht werden kann.

Diese Aufgabe wird erfindungsgemäss durch den Gegenstand des unabhängigen Anspruchs 1 gelöst. Weitere Ausführungsformen des erfindungsgemässen Gegenstands finden sich in den abhängigen Unteransprüchen.

Es wird ein Zahnrad für ein Getriebe, insbesondere ein Ziehkeilgetriebe, bereitgestellt.

Erfindungsgemäss enthält das Zahnrad ein erstes Ringelement und ein zweites Ringelement, wobei das erste Ringelement eine Mitnahmekontur zur Aufnahme eines Schaftstifts des Getriebes aufweist und das zweite Ringelement an einer Außenfläche eine Verzahnung aufweist.

Durch die Ausformung des Zahnrads in Form eines ersten und zweiten Ringelements ist die Dimensionierung der Verzahnung des Zahnrads von der Dimensionierung der Mitnahmekontur zur Aufnahme eines Schaftstifts des Getriebes entkoppelt und variabel gestaltbar. Hierdurch kann der Außendurchmesser der Verzahnung kleiner gestaltet werden als der Außendurchmesser der Mitnahmekontur, wodurch ein kleineres Zahnrad und folglich eine große Getriebespreizung erreicht werden kann.

Gemäß einer vorteilhaften Ausführungsform der vorliegenden Erfindung kann vorgesehen sein, dass das zweite Ringelement in einer Richtung hinter dem ersten Ringelement positioniert ist und der Außendurchmesser des zweiten Ringelements kleiner ist als der Außendurchmesser des ersten Ringelements. Hierdurch ist sichergestellt, dass der Außendurchmesser des zweiten Ringelements mitsamt der Verzahnung kleiner sein kann als der Außendurchmesser des ersten Ringelements mitsamt der Mitnahmekontur.

Weiterhin kann vorteilhaft vorgesehen sein, dass entlang einer Oberfläche der Mitnahmekontur und entlang einer Innenfläche des zweiten Ringelements eine durchgehende Lauffläche für eine Abtriebswelle des Getriebes enthalten ist. Hierdurch ist ein kontinuierliches Aufliegen der Innenfläche des Zahnrads auf der Oberfläche der Abtriebswelle gewährleistet, wodurch ein beständiger Lauf des Zahnrads um die Abtriebswelle, d.h. ohne ein Springen des Zahnrads von der Abtriebswelle, erreicht wird.

Ferner kann vorgesehen sein, dass die Mitnahmekontur wenigstens vier an der Innenfläche des ersten Ringelements gegenüberliegende Nuten enthält. Hierdurch kann eine schnelle Aufnahme des Schaftstifts in die Nuten der Mitnahmekontur und damit ein schnelleres Umschalten auf ein anderes Zahnrad sichergestellt werden.

Weitere Vorteile ergeben sich aus der folgenden Figurenbeschreibung. In den Figuren sind verschiedene Ausführungsbeispiele der vorliegenden Erfindung dargestellt. Die Figuren, die Beschreibung und die Ansprüche enthalten zahlreiche Merkmale in Kombination. Der Fachmann wird die Merkmale zweckmässigerweise auch einzeln betrachten und zu sinnvollen weiteren Kombinationen zusammenfassen.

Es zeigen:
- Fig. 1: eine perspektivische Ansicht einer Abtriebswelle mit einer Anzahl an Zahnrädern und einer Schaltstange zusammen einem erfindungsgemäßen Zahnrad;
- Fig. 2: einen Querschnitt durch die Abtriebswelle samt Zahnräder, Schaltstange und Ziehkeil;
- Fig. 3: einen Querschnitt durch die Zahnräder, Ziehkeil und Schaltstange;
- Fig. 4: einen Querschnitt durch die Zahnräder und Ziehkeil;
- Fig. 5: einen Querschnitt durch die Zahnräder;

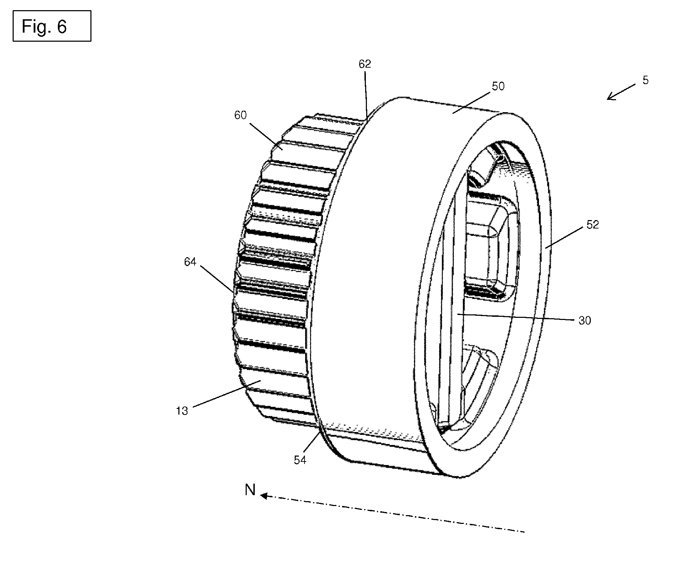

- Fig. 6: eine perspektivische Ansicht des erfindungsgemäßen Zahnrads und Ziehkeil;
- Fig. 7: eine Seitenansicht des erfindungsgemäßen Zahnrads;
- Fig. 8: einen Querschnitt durch das erfindungsgemäße Zahnrad;
- Fig. 9: einen Querschnitt durch das erfindungsgemäße Zahnrad und Ziehkeil;
- Fig. 10: eine perspektivische Rückansicht des erfindungsgemäßen Zahnrads; und
- Fig. 11: eine perspektivische Vorderansicht des erfindungsgemäßen Zahnrads.

### Ausführungsbeispiel:

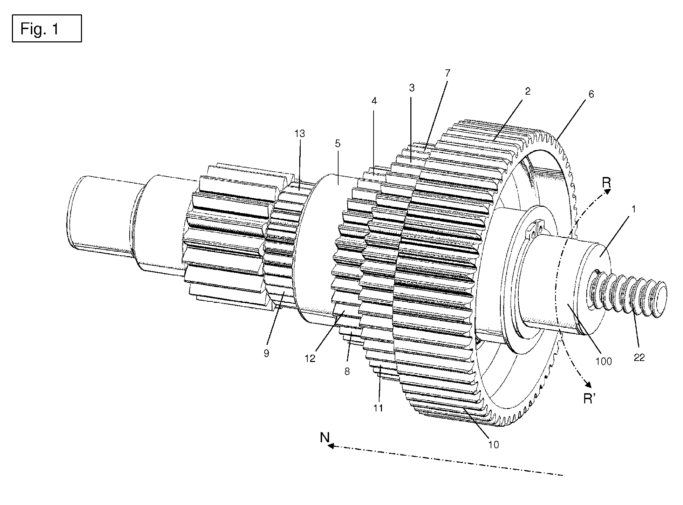

Fig. 1 zeigte eine Abtriebswelle 1 mit einem ersten Zahnrad 2, zweiten Zahnrad 3, dritten Zahnrad 4 und vierten Zahnrad 5. Jedes der Zahnräder 2, 3, 4, 5 weist an der jeweiligen Außenfläche 6, 7, 8, 9 eine entsprechende Verzahnung 10, 11, 12, 13 auf.

Die vier Zahnräder 2, 3, 4, 5 haben unterschiedlich große Außendurchmesser. Das erste Zahnrad 2 hat den größten Außendurchmesser, das zweite Zahnrad 3 hat den zweitgrößten Außendurchmesser, das dritte Zahnrad 4 hat den drittgrößten Außendurchmesser und das vierte Zahnrad 5 hat den viertgrößten und damit kleinsten Außendurchmesser. Die Abtriebswelle 1 sowie die vier Zahnräder 2, 3, 4, 5 sind Bestandteil eines (nicht gezeigten) Ziehkeilgetriebes. Zu dem Ziehkeilgetriebe gehört des Weiteren eine Antriebswelle, auf dem ebenfalls ein erstes Zahnrad, zweites Zahnrad, drittes Zahnrad und viertes Zahnrad positioniert sind. Die vier Zahnräder der Antriebswelle weisen ebenfalls unterschiedlich große Außendurchmesser auf. Die Antriebswelle sowie das erste Zahnrad, zweite Zahnrad, dritte Zahnrad und vierte Zahnrad auf der Antriebswelle ist in den Figuren nicht dargestellt. Die vier Zahnräder 2, 3, 4, 5 der Abtriebswelle 1 sowie der Antriebswelle sind in einem umgekehrten Größenverhältnis so zueinander positioniert, dass die Verzahnungen der Zahnräder ineinander greifen. Die Abtriebswelle 1 und die Antriebswelle sind in dem Getriebe parallel zueinander positioniert. Hierbei greift die Verzahnung 10 des Zahnrads 2 der Abtriebswelle mit dem größten Außendurchmesser in die Verzahnung des Zahnrads der Antriebswelle mit dem kleinsten Außendurchmesser. Wie in einem Ziehkeilgetriebe üblich, sind die übrigen Zahnräder 3, 4, 5 der Abtriebswelle 1 und Antriebswelle gemäß ihren Außendurchmessern entsprechend zueinander positioniert. Durch die größenunterschiedliche Anordnung der Zahnräder mit verschieben Außendurchmessern können zwischen der Antriebswelle und der Abtriebswelle 1 verschiedene Übersetzungsverhältnisse von Drehzahl bzw. Drehmoment erzeugt werden.

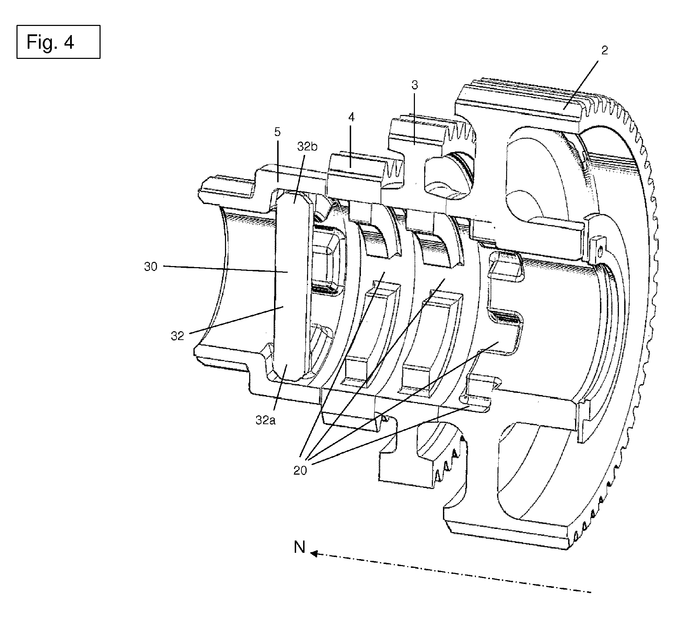

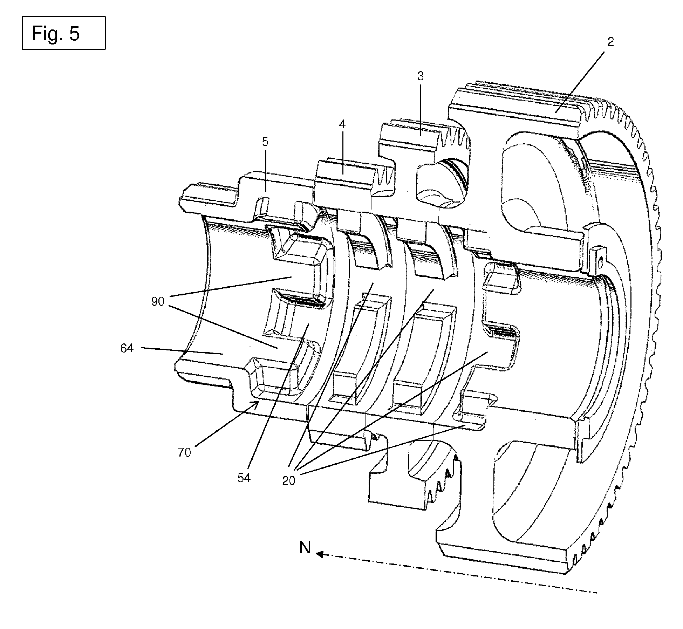

Wie in Fig. 1 bis 5 gezeigt, sind die vier Zahnräder 2, 3, 4, 5 der Abtriebswelle 1 in einer axialen Richtung N hintereinander auf der Abtriebswelle 1 drehbar positioniert. Die vier Zahnräder 2, 3, 4, 5 können somit relativ zu der Abtriebswelle 1 in Drehrichtung R bzw. R' gedreht werden (vgl. Fig. 1). Wie insbesondere in Fig. 5 gezeigt, enthält jedes der vier Zahnräder 2, 3, 4, 5 an der jeweiligen Außenfläche 6, 7, 8, 9 eine entsprechende Verzahnung 10, 11, 12, 13 und an der Innenfläche 14, 15, 16, 17 eine Anzahl an gegenüberliegenden Nuten 20. Wie nachfolgend im Detail beschrieben dienen die Nuten 20 zur Aufnahme eines Ziehkeils 30.

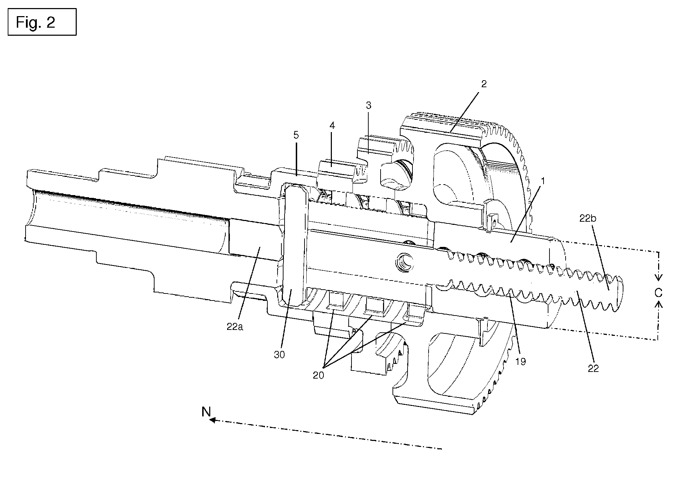

Wie insbesondere in Fig. 2 dargestellt, weist die Abtriebswelle 1 eine Durchbohrung 19 auf. In der Durchbohrung 19 ist eine Schaltstange 22 positioniert. Die Schaltstange 22 kann in und gegen die axiale Richtung N relativ zu der Abtriebswelle 1 verschoben werden.

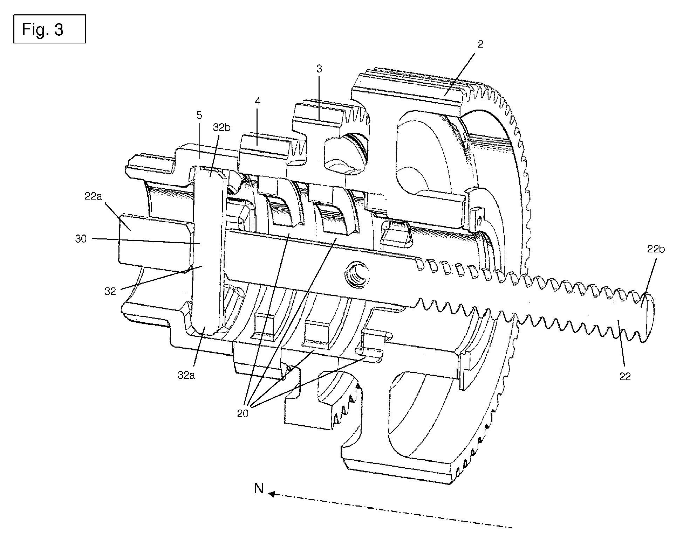

Wie in Fig. 3 gezeigt, weist die Schaltstange 22 ein erstes Ende 22a und ein zweites Ende 22b auf. In der Nähe des ersten Endes 22a der Schaltstange 22 ist der Ziehkeil 30 (auch Schaltstift genannt) befestigt. Der Ziehkeil 30 enthält einen zylindrischen Grundkörper 32 mit einem ersten Ende 32a und einen zweiten Ende 32b. Der Grundkörper 32 des Ziehkeils 30 ist rechtwinklig zu der Längserstreckung der Abtriebswelle 1 und der axialen Richtung N angeordnet. Das erste Ende 32a und das zweite Ende 32b des Grundkörpers 32 ragen aus der Abtriebswelle 1 heraus.

Mit Hilfe der Schaltstange 22 kann der Ziehkeil 30 in sowie entgegen der axialen Richtung N entlang der Abtriebswelle 1 und relativ zu den vier Zahnrädern 2, 3, 4, 5 bewegt werden. Der Ziehkeil 30 ist dabei so dimensioniert, dass das erste Ende 32a und das zweite Ende 32b des Grundkörpers 32 in die jeweiligen Nuten 20 der einzelnen vier Zahnräder 2, 3, 4, 5 eingefügt werden kann. Wenn der Ziehkeil 30 in die jeweiligen Nuten 20 eines der vier Zahnräder 2, 3, 4, 5 eingefügt ist, besteht eine kraftschlüssige Verbindung zwischen der Abtriebswelle 1, dem Ziehkeil 30 und dem jeweiligen Zahnrad 2, 3, 4, 5. Das Verschieben der Position des Ziehkeils 30 von einer kraftschlüssigen Verbindung mit einem Zahnrad (z.B. das zweite Zahnrad 3) zu einer kraftschlüssigen Verbindung mit einem anderen Zahnrad (z.B. das dritte Zahnrad 4) bewirkt einen Gangwechsel und folglich eine Veränderung des Übersetzungsverhältnisses innerhalb des Ziehkeilgetriebes. In Fig. 2 bis 4 ist der Ziehkeil 30 in zwei der sechs Nute 41, 42, 43, 44, 45, 46 des vierten Zahnrads 5 eingefügt.

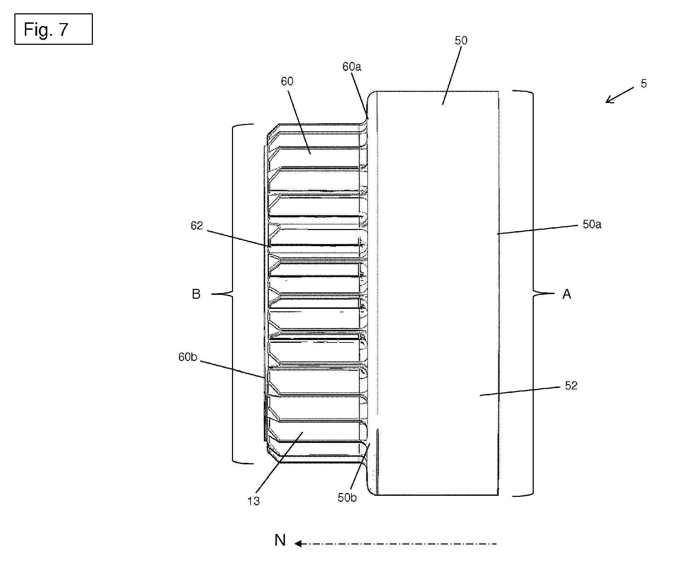

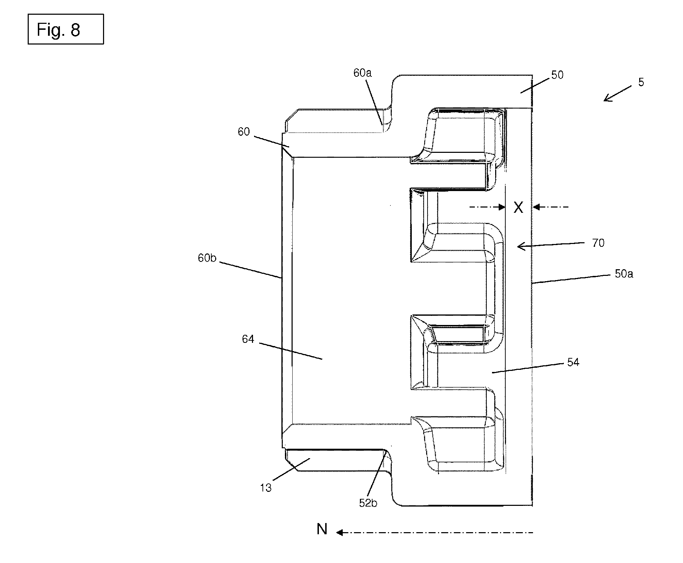

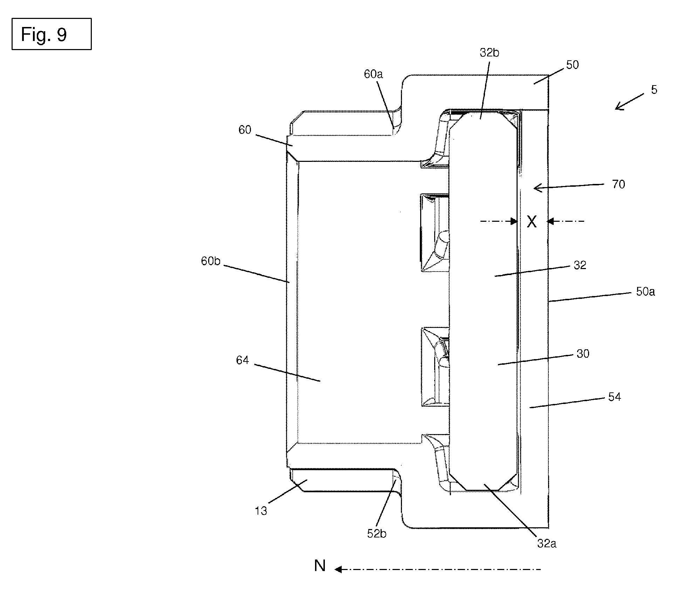

Wie in Fig. 7 bis 11 dargestellt, enthält das vierte Zahnrad 5 ein erstes Ringelement 50 und ein zweites Ringelement 60.

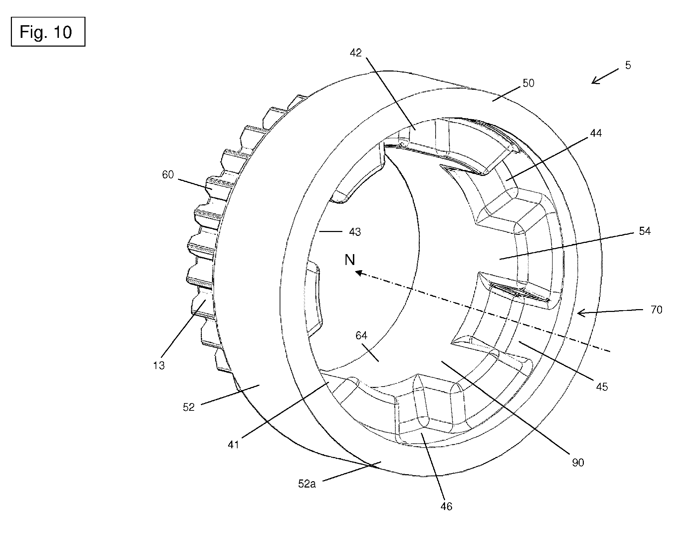

Das erste Ringelement 50 enthält ein erstes Ende 50a, ein zweites Ende 50b, eine Außenfläche 52 und eine Innenfläche 54 (vgl. Fig. 10). Die Außenfläche 52 des ersten Ringelements 50 ist als durchgehende Oberfläche gestaltet. Die Innenfläche 54 des ersten Ringelements 50 enthält eine Mitnahmekontur 70. Die Mitnahmekontur 70 enthält sechs Nuten 41, 42, 43, 44, 45, 46, welche in drei Nutenpaaren mit jeweils zwei gegenüberliegenden Nuten gegliedert sind. Die sechs Nuten 41, 42, 43, 44, 45, 46 sind gleichmäßig zueinander beabstandet an der Innenfläche 54 des ersten Ringelements 50 positioniert. Entlang den Nuten 41, 42, 43, 44, 45, 46 erstreckt sich um die Mitnahmekontur 70 die Innenfläche 54, die als glatte durchgehende Oberfläche gestaltet ist. Gemäß einer alternativen (nicht gezeigten) Ausführungsform der vorliegenden Erfindung kann die Mitnahmekontur 70 weniger oder mehr als sechs Nuten bzw. drei Nutenpaare enthalten. Die Nutenpaare dienen dazu, das erste Ende 32a und das zweite Ende 32b des Grundkörpers 32 des Ziehkeils 30 aufzunehmen. Die Mitnahmekontur 70 ist in einem gewissen Abstand X zu dem ersten Ende 50a des ersten Ringelements 50 positioniert. Der Abstand X der Mitnahmekontur 70 zu dem ersten Ende 50a des ersten Ringelements 50 dient dazu, den Ziehkeil 30 bei einem Gangwechsel leichter in die Mitnahmekontur 70 einzufügen.

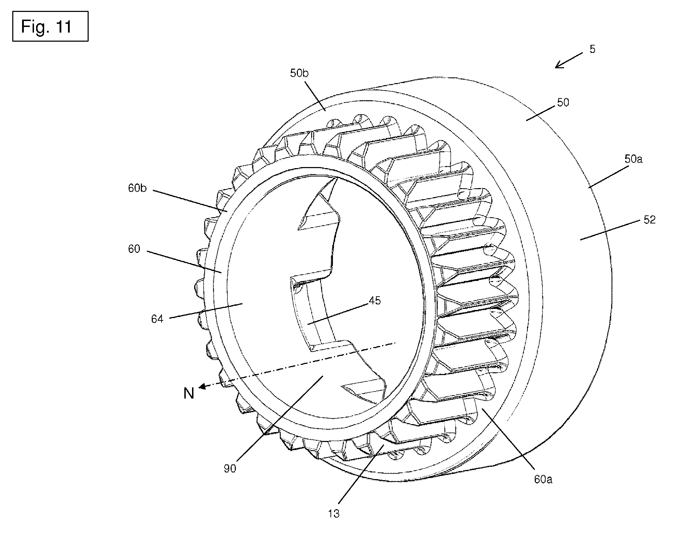

Das zweite Ringelement 60 enthält erstes Ende 60a, ein zweites Ende 60b, eine Außenfläche 62 und eine Innenfläche 64. Wie insbesondere in Fig. 11 dargestellt, ist an der Außenfläche 62 des zweiten Ringelements 60 die umlaufende Verzahnung 13 positioniert. Die Innenfläche 64 des zweiten Ringelements 60 ist als glatte durchgehende Oberfläche gestaltet.

Das erste Ringelement 50 und das zweite Ringelement 60 sind in axialer Richtung N hintereinander positioniert, sodass das zweite Ende 54 des ersten Ringelements 50 an dem ersten Ende 62 des zweiten Ringelements 60 anliegt. Darüber hinaus ist der Außendurchmesser A des ersten Ringelements 50 größer als der Außendurchmesser B des zweiten Ringelements 60. Wie in Fig. 7 gezeigt, ist der Außendurchmesser B des zweiten Ringelements 60 mitsamt der Verzahnung 13 kleiner als der Außendurchmesser A des ersten Ringelements 50. Insbesondere ist der Außendurchmesser B des zweiten Ringelements 60 mitsamt der Verzahnung 13 nur wenig größer als der Außendurchmesser C der Abtriebswelle 1 (vgl. Fig. 2).

Die Oberfläche 90 um die Mitnahmekontur 70 und die Innenfläche 64 des zweiten Ringelements 60 bilden eine glatte durchgehende Lauffläche, sodass die Oberfläche 100 der Abtriebswelle 1 großflächig in Kontakt mit der Oberfläche 90 um die Mitnahmekontur 70 und der Innenfläche 64 des zweiten Ringelements 60 steht. Durch diesen großflächigen Kontakt ist ein besonders ruhiger Umlauf, d.h. ohne ein Springen oder Fressen, des vierten Zahnrads 5 um die Abtriebswelle 1 gewährleistet.

Die Verzahnung sowie die Mitnahmekontur des erfindungsgemäßen Zahnrads können durch Kaltfließpressen hergestellt werden. Es ist jedoch auch möglich, dass das erfindungsgemäße Zahnrad auch mit jedem anderen geeigneten Herstellungsverfahren erzeugt wird.

## Patentansprüche

1. Zahnrad (5) für ein Getriebe, insbesondere ein Ziehkeilgetriebe,
**dadurch gekennzeichnet, dass** das Zahnrad (5) ein erstes Ringelement (50) und ein zweites Ringelement (60) enthält, wobei das erste Ringelement (50) eine Mitnahmekontur (70) zur Aufnahme eines Schaftstifts (30) des Getriebes aufweist und das zweite Ringelement (60) an einer Außenfläche (62) eine Verzahnung (13) aufweist.

2. Zahnrad (5) nach Anspruch 1,
**dadurch gekennzeichnet, dass** das zweite Ringelement (60) in einer Richtung (N) hinter dem ersten Ringelement (50) positioniert ist und der Außendurchmesser (B) des zweiten Ringelements (60) kleiner ist als der Außendurchmesser (A) des ersten Ringelements (50).

3. Zahnrad (5) nach Anspruch 1 oder 2,
**dadurch gekennzeichnet, dass** entlang einer Oberfläche (90) der Mitnahmekontur (70) und entlang einer Innenfläche (64) des zweiten Ringelements (60) eine durchgehende Lauffläche für eine Abtriebswelle (1) des Getriebes enthalten ist.

4. Zahnrad (5) nach wenigstens einem der Ansprüche 1 bis 3,
**dadurch gekennzeichnet, dass** die Mitnahmekontur (70) wenigstens vier an der Innenfläche (54) des ersten Ringelements (50) gegenüberliegende Nuten (20) enthält.
